# EUROPEAN PATENT APPLICATION

(11) **EP 4 596 355 A1**
(43) Date of publication of application: **06.08.2025**
(21) Application number: 23768614.2
(22) Date of filing: 11.08.2023
(51) Int. Cl.: B60W 50/14, B60W 30/095, B62J 50/21

(54) **CONTROL DEVICE AND CONTROL METHOD FOR RIDER ASSISTANCE SYSTEM**

(30) Priority: 29.09.2022 JP 2022156710
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2023/058124
(87) International publication number: WO 2024/069266

(57) **Abstract**

The invention obtains a controller and a control method capable of improving safety of a lean vehicle.

In a controller 20 and a control method according to the invention, an acquisition section of the controller 20 acquires approaching object information as information on an approaching object approaching a lean vehicle 1 on the basis of surrounding environment information of the lean vehicle 1. An execution section of the controller 20 executes rider-assistance operation to assist with driving by a rider on the basis of the approaching object information. Furthermore, a determination section of the controller 20 determines presence or absence of a possibility of getting off as a possibility that the rider gets off the lean vehicle 1. In the case where the determination section determines the presence of the possibility of getting off, the execution section executes the rider-assistance operation.

## Description

### Technical Field

The present invention relates to a controller and a control method capable of improving safety of a lean vehicle.

### Background Art

As a conventional technique related to a lean vehicle such as a motorcycle, a technique of assisting a rider with driving has been available. For example, a driver-assistance system is disclosed in PTL 1. The driver-assistance system warns the rider of the motorcycle that the motorcycle inappropriately approaches an obstacle on the basis of information detected by a sensor device that detects the obstacle present in a travel direction or substantially in the travel direction.

### Citation List

### Patent Literature

PTL 1: JP2009-116882A

### Summary of Invention

### Technical Problem

As the technique of assisting with driving by the rider, rider-assistance operation has been available. The rider-assistance operation assists with driving by the rider on the basis of approaching object information that is information on an approaching object approaching the lean vehicle. An example of such rider-assistance operation is operation to issue a warning in order to notify the rider of presence or approach of the approaching object (for example, another vehicle) that is located behind the lean vehicle. By the way, when parking the lean vehicle, the rider is required to perform a complicated task such as supporting the lean vehicle with his/her feet on a road surface and then flipping a kickstand member of the lean vehicle. For this reason, it is likely to neglect checking of surroundings. Thus, it is desired to improve safety.

The invention has been made with the above-described problem as the background and therefore obtains a controller and a control method capable of improving safety of a lean vehicle.

### Solution to Problem

A controller according to the invention is a controller of a rider-assistance system that assists with driving by a rider of a lean vehicle, includes: an acquisition section that acquires approaching object information as information on an approaching object approaching the lean vehicle on the basis of surrounding environment information of the lean vehicle; and an execution section that executes rider-assistance operation to assist with driving by the rider on the basis of the approaching object information, and further includes: a determination section that determines presence or absence of a possibility of getting off that is a possibility that the rider gets off the lean vehicle. In the case where the determination section determines that the possibility of getting off is present, the execution section executes the rider-assistance operation.

A control method according to the invention is a control method for a rider-assistance system that assists with driving by a rider of a lean vehicle, includes: acquiring approaching object information by an acquisition section of a controller on the basis of surrounding environment information of the lean vehicle, the approaching object information being information on an approaching object approaching the lean vehicle; and executing rider-assistance operation by an execution section of the controller to assist with driving by the rider on the basis of the approaching object information, and further includes: determining presence or absence of a possibility of getting off by a determination section of the controller, the possibility of getting off being a possibility that the rider gets off the lean vehicle. In the case where the determination section determines that the possibility of getting off is present, the execution section executes the rider-assistance operation.

### Advantageous Effects of Invention

In the controller and the control method according to the invention, the acquisition section of the controller acquires the approaching object information, which is the information on the approaching object approaching the lean vehicle, on the basis of the surrounding environment information of the lean vehicle. The execution section of the controller executes the rider-assistance operation to assist with driving by the rider on the basis of the approaching object information. Furthermore, the determination section of the controller determines the presence or the absence of the possibility of getting off, which is the possibility that the rider gets off the lean vehicle. In the case where the determination section determines the presence of the possibility of getting off, the execution section executes the rider-assistance operation. In this way, it is possible to execute the rider-assistance operation that is based on the approaching object information at appropriate timing, such as timing at which the rider performs a task for parking the lean vehicle or timing at which such a task is performed in the near future. Therefore, it is possible to improve safety of the lean vehicle.

### Brief Description of Drawings

Fig. 1 is a schematic view illustrating an outline configuration of a lean vehicle according to an embodiment of the invention.
Fig. 2 is a block diagram illustrating an exemplary functional configuration of a controller according to the embodiment of the invention.
Fig. 3 is a flowchart illustrating an example of a processing procedure that is executed by the controller according to the embodiment of the invention.
Fig. 4 is a view illustrating a situation where another vehicle located behind the lean vehicle according to the embodiment of the invention is detected.

### Description of Embodiments

A description will hereinafter be made on a controller and a control method according to the invention with reference to the drawings.

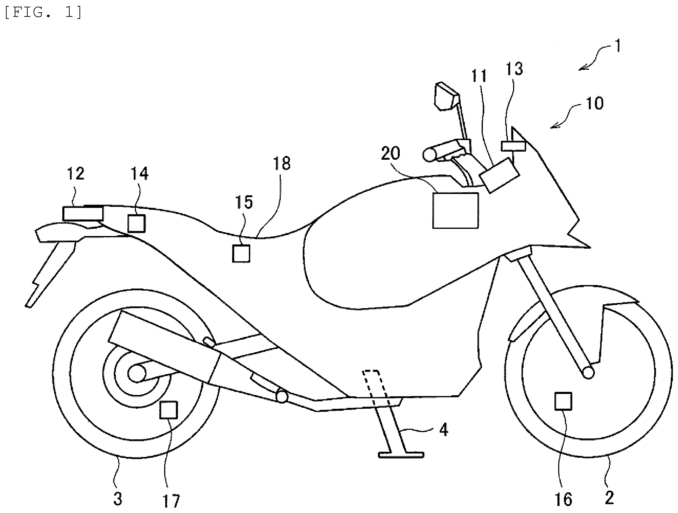

The following description will be made on the controller that is used for a two-wheeled motorcycle (see a lean vehicle 1 in Fig. 1). However, a vehicle as a control target of the controller according to the invention only needs to be a lean vehicle, and may be a lean vehicle other than the two-wheeled motorcycle. The lean vehicle means a vehicle, a vehicle body of which is tilted to the right when turning in a right direction and is tilted to the left when turning in a left direction. Examples of the lean vehicle are motorcycles (a two-wheeled motor vehicle and a three-wheeled motor vehicle) and a bicycle. The motorcycles include a vehicle having an engine as a power source, a vehicle having an electric motor as a power source, and the like. Examples of the motorcycles are a motorbike, a scooter, and an electric scooter. The bicycle means a vehicle capable of traveling forward on a road by a depression force applied to pedals by a rider. Examples of the bicycle are an electrically-assisted bicycle and an electric bicycle.

A configuration, operation, and the like, which will be described below, merely constitute one example. The controller and the control method according to the invention are not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Lean Vehicle>

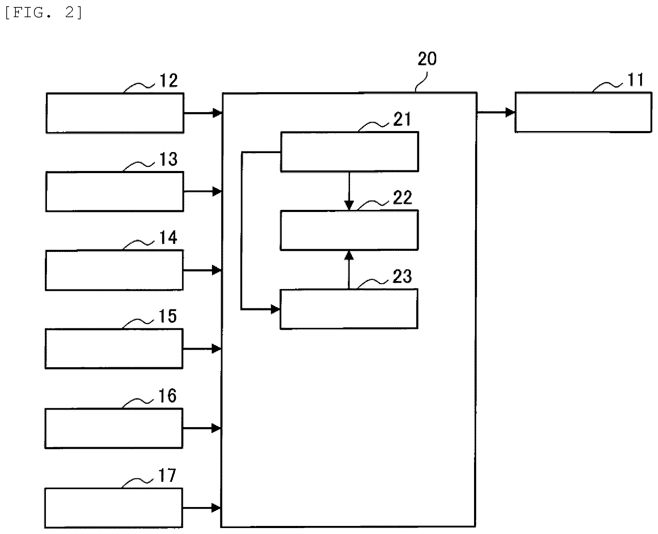

A description will be made on a configuration of the lean vehicle 1 according to an embodiment of the invention with reference to Fig. 1 and Fig. 2.

Fig. 1 is a schematic view illustrating an outline configuration of the lean vehicle 1. The lean vehicle 1 is a two-wheeled motorcycle that corresponds to an example of the lean vehicle according to the invention. As illustrated in Fig. 1, the lean vehicle 1 includes a front wheel 2, a rear wheel 3, a kickstand member 4, a display device 11, a surrounding environment sensor 12, a camera 13, an inertial measurement unit (IMU) 14, a seating sensor 15, a front-wheel rotational frequency sensor 16, a rear-wheel rotational frequency sensor 17, a seating section 18, and a controller (ECU) 20.

The lean vehicle 1 includes a rider-assistance system 10 that assists with driving by a rider of the lean vehicle 1. Of the above components, the rider-assistance system 10 particularly includes the display device 11, the surrounding environment sensor 12, the camera 13, the IMU 14, the seating sensor 15, the front-wheel rotational frequency sensor 16, the rear-wheel rotational frequency sensor 17, and the controller 20.

The display device 11 has a display function to visually display information. Examples of the display device 11 are a liquid-crystal display and a lamp. Arrangement of the display device 11 in relation to a vehicle body is not particularly limited. For example, the display device 11 may be provided near a mirror of the lean vehicle 1 or may be provided to a portion in front of a handlebar in a trunk of the lean vehicle 1. In an example illustrated in Fig. 1, the display device 11 is provided to the lean vehicle 1. However, the display device 11 may be provided to the rider's gear (for example, a helmet).

The surrounding environment sensor 12 detects surrounding environment information about environment around the lean vehicle 1. More specifically, the surrounding environment sensor 12 is provided to a rear portion of the lean vehicle 1, and detects the surrounding environment information behind the lean vehicle 1. The surrounding environment information that is detected by the surrounding environment sensor 12 is output to the controller 20.

The surrounding environment information that is detected by the surrounding environment sensor 12 may be information on a distance to or an orientation of a target object that is located around the lean vehicle 1 (for example, a relative position, a relative distance, a relative speed, relative acceleration, or the like), or may be a characteristic of the target object that is located around the lean vehicle 1 (for example, a type of the target object, a shape of the target object itself, a mark on the target object, or the like). Examples of the surrounding environment sensor 12 are a radar, a Lidar sensor, an ultrasonic sensor, and a camera.

The surrounding environment information can also be detected by a surrounding environment sensor that is mounted to another vehicle or by an infrastructure facility. In other words, the controller 20 can also acquire the surrounding environment information via wireless communication with the other vehicle or the infrastructure facility.

The camera 13 captures an image of the rider of the lean vehicle 1. More specifically, the camera 13 is provided in front of a riding position (more specifically, an assumed riding position) of the rider of the lean vehicle 1 and faces rearward. That is, the camera 13 captures the image of the rider of the lean vehicle 1 from the front. However, the camera 13 may be provided behind the riding position (more specifically, the assumed riding position) of the rider of the lean vehicle 1 and may face forward. That is, the camera 13 may capture the image of the rider of the lean vehicle 1 from behind. The camera 13 is not limited to a camera that is provided solely for capturing the image of the rider. For example, a camera that is provided to acquire the surrounding environment information may be used to capture the image of the rider.

The IMU 14 includes a three-axis gyroscope sensor and a three-directional acceleration sensor, and detects a posture of the lean vehicle 1. The IMU 14 is provided to the trunk of the lean vehicle 1, for example. For example, the IMU 14 detects a lean angle of the lean vehicle 1 and outputs a detection result. The IMU 14 may detect another physical quantity that can substantially be converted to the lean angle of the lean vehicle 1. The lean angle corresponds to an angle representing a tilt in a rolling direction of the vehicle body (more specifically, the trunk) of the lean vehicle 1 with respect to an upper vertical direction. The IMU 14 may only include parts of the three-axis gyroscope sensor and the three-directional acceleration sensor.

The seating sensor 15 detects the rider's load on the seating section 18 of the lean vehicle 1. The seating section 18 is a portion of the lean vehicle 1 on which the rider is seated, and is a seat, for example. Information on the rider's load, which is detected by the seating sensor 15, corresponds to an example of load information as information on the rider's load on the seating section 18. The seating sensor 15 can detect whether the rider is riding, for example.

The front-wheel rotational frequency sensor 16 is a wheel rotational frequency sensor that detects a rotational frequency of the front wheel 2 (for example, a rotational frequency of the front wheel 2 per unit time [rpm], a travel distance of the front wheel 2 per unit time [km/h], or the like). The front-wheel rotational frequency sensor 16 may detect another physical quantity that can substantially be converted to the rotational frequency of the front wheel **2.** The front-wheel rotational frequency sensor 16 is provided to the front wheel 2.

The rear-wheel rotational frequency sensor 17 is a wheel rotational frequency sensor that detects a rotational frequency of the rear wheel 3 (for example, a rotational frequency of the rear wheel 3 per unit time [rpm], a travel distance of the rear wheel 3 per unit time [km/h], or the like). The rear-wheel rotational frequency sensor 17 may detect another physical quantity that can substantially be converted to the rotational frequency of the rear wheel 3. The rear-wheel rotational frequency sensor 17 is provided to the rear wheel 3.

The controller 20 controls the rider-assistance system 10. For example, a part or whole of the controller 20 includes a microcomputer, a microprocessor unit, memory, or the like. Alternatively, the part or the whole of the controller 20 may be one whose firmware and the like can be updated, or may be a program module or the like that is executed by a command from a CPU or the like, for example. The controller 20 may be provided as one unit or may be divided into plural units, for example.

Fig. 2 is a block diagram illustrating an exemplary functional configuration of the controller 20. As illustrated in Fig. 2, the controller 20 includes an acquisition section 21, an execution section 22, and a determination section 23, for example. The controller 20 communicates with each of the devices in the rider-assistance system 10.

The acquisition section 21 acquires information from each of the devices in the rider-assistance system 10, and outputs the acquired information to the execution section 22 and the determination section 23. For example, the acquisition section 21 acquires the information from the surrounding environment sensor 12, the camera 13, the IMU 14, the seating sensor 15, the front-wheel rotational frequency sensor 16, and the rear-wheel rotational frequency sensor 17. In the present specification, the acquisition of the information can include extraction, generation, and the like of the information.

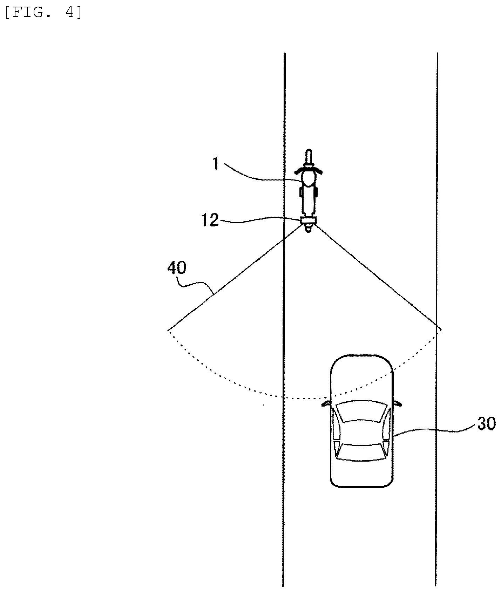

The execution section 22 executes rider-assistance operation by controlling operation of each of the devices in the lean vehicle 1. The rider-assistance operation is operation to assist with driving by the rider of the lean vehicle 1. In particular, the execution section 22 executes the rider-assistance operation to assist with driving by the rider on the basis of approaching object information that is information on an approaching object approaching the lean vehicle 1. For example, the execution section 22 executes, as the rider-assistance operation that is based on the approaching object information, operation to issue a warning in order to notify the rider of the lean vehicle 1 of presence or approach of another vehicle (see another vehicle 30 in Fig. 4, which will be described below) that is the approaching object located behind the lean vehicle 1. The above operation includes operation called blind spot warning, operation called rear approach warning, or the like.

The determination section 23 makes various determinations. A determination result by the determination section 23 is used for processing that is executed by the execution section 22.

### <Operation of Controller>

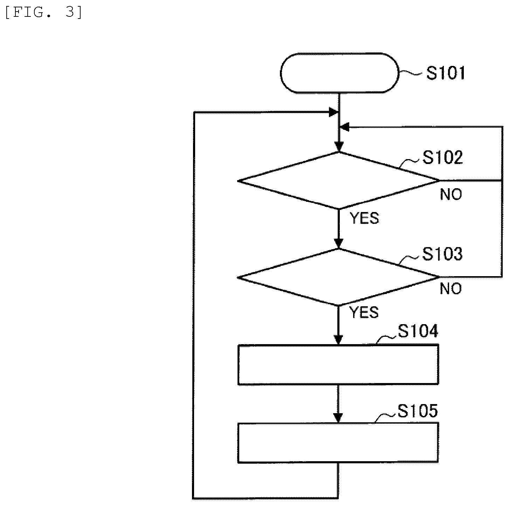

A description will be made on operation of the controller 20 according to the embodiment of the invention with reference to Fig. 3 and Fig. 4.

Fig. 3 is a flowchart illustrating an example of a processing procedure that is executed by the controller 20. Step S101 in Fig. 3 corresponds to initiation of a control flow illustrated in Fig. 3.

When the control flow illustrated in Fig. 3 is initiated, in step S102, the determination section 23 determines whether the lean vehicle 1 is stopped.

That the lean vehicle 1 is stopped means that a vehicle speed of the lean vehicle 1 is 0 km/h or about 0 km/h. For example, in the case where the vehicle speed of the lean vehicle 1 is lower than a reference vehicle speed near 0 km/h, the determination section 23 determines that the lean vehicle 1 is stopped. The vehicle speed of the lean vehicle 1 can be acquired on the basis of the detection result of the front-wheel rotational frequency sensor 16 and the detection result of the rear-wheel rotational frequency sensor 17, for example.

If it is not determined in step S102 that the lean vehicle 1 is stopped (step S102/NO), the processing in step S102 is repeated. On the other hand, if it is determined that the lean vehicle 1 is stopped (step S102/YES), the processing proceeds to step S103.

In step S103, the determination section 23 determines presence or absence of a possibility of getting off that is a possibility that the rider gets off the lean vehicle 1. In step S103, a case where it is determined that the possibility of getting off is present corresponds to a case where it is determined YES, and a case where it is determined that the possibility of getting off is absent corresponds to a case where it is determined NO.

The case where it is determined that the possibility of getting off is present includes not only a case where it is determined that the rider has actually gotten off the lean vehicle 1 but also a case where it is expected that the rider gets off the lean vehicle 1 in the near future. That is, the case where it is determined that the possibility of getting off is present includes not only a case where the rider has stopped the lean vehicle 1 and has gotten off the lean vehicle 1 but also a case where the rider is riding the lean vehicle 1 in a stopped state of the lean vehicle 1.

More specifically, the determination section 23 uses various types of the information to determine the presence or the absence of the possibility of getting off.

For example, the determination section 23 determines the presence or the absence of the possibility of getting off on the basis of vehicle state information that indicates a state of the lean vehicle 1.

The determination section 23 may use, as the vehicle state information, lean angle information of the lean vehicle 1, for example. The lean angle information is information on the lean angle of the lean vehicle 1, and includes information indicating the lean angle, information indicating a degree of a change in the lean angle, or the like. For example, the lean angle information can be acquired on the basis of the detection result of the IMU 14. For example, in the case where the lean angle of the lean vehicle 1 is larger than a reference lean angle, the determination section 23 may determine that the possibility of getting off is present. The reference lean angle is set to a value with which it is possible to appropriately determine whether the rider has gotten off the lean vehicle 1, for example. Alternatively, for example, in the case where a degree of a change in the lean angle of the lean vehicle 1 is larger than a reference change degree, the determination section 23 may determine that the possibility of getting off is present. The reference change degree is set to a value with which it is possible to appropriately determine whether the rider has gotten off the lean vehicle 1, for example.

The determination section 23 may use, as the vehicle state information, kickstand member information of the lean vehicle 1, for example. The kickstand member information is information on the kickstand member 4 of the lean vehicle 1, and includes information indicating whether the kickstand member 4 is projected toward the ground side or retracted toward the vehicle body side, and the like. The kickstand member information can be acquired on the basis of a detection result of a sensor, which is not illustrated and detects a state of the kickstand member 4, for example. For example, in the case where the kickstand member 4 is in the state of being projected toward the ground side, the determination section 23 may determine that the possibility of getting off is present.

Alternatively, for example, the determination section 23 determines the presence or the absence of the possibility of getting off on the basis of rider state information that indicates a state of the rider of the lean vehicle 1.

The determination section 23 may use rider posture information as the rider state information, for example. The rider posture information is information on a posture of the rider of the lean vehicle 1, and includes information indicating a position of the rider's body part with respect to the lean vehicle 1, information indicating an orientation of the rider's body part with respect to the lean vehicle 1, or the like. Examples of the above part are a head, a hand, and a hip. The rider posture information can be acquired by subjecting image data captured by the camera 13 to image processing, for example. For example, in the case where the posture information that is acquired on the basis of the image data is information indicating that the rider is performing operation to get off, the determination section 23 may determine that the possibility of getting off is present.

For example, the determination section 23 may use, as the rider state information, load information that is information on the rider's load applied to the seating section 18 of the lean vehicle 1, for example. For example, the load information includes information indicating a magnitude of the rider's load, information indicating a position in the lean vehicle 1 where the rider's load is applied, or the like. For example, the load information can be acquired on the basis of the detection result of the seating sensor 15. For example, the determination section 23 may determine the presence or the absence of the possibility of getting off on the basis of the magnitude of the rider's load, a change in the position in the lean vehicle 1 where the rider's load is applied, or the like. For example, in the case where the rider's load is rapidly reduced, the determination section 23 may determine that the possibility of getting off is present.

The above description has been made on the example of the information that is used for the determination on the presence or the absence of the possibility of getting off. However, the information that is used for the determination on the presence or the absence of the possibility of getting off may be other than the information that has been described above. For example, as the vehicle state information, information on the posture other than the lean angle information may be used. Alternatively, for example, as the vehicle state information, information on a member other than the kickstand member 4 may be used. In addition, for example, as the rider state information, information other than the rider posture information and the load information may be used.

For example, the determination section 23 may determine the presence or the absence of the possibility of getting off on the basis of location information of the lean vehicle 1 that is acquired from a navigation system or the like. For example, in the case where the lean vehicle 1 has arrived at a destination of a route guided by the navigation system, the determination section 23 may determine that the possibility of getting off is present.

As the information used for the determination on the presence or the absence of the possibility of getting off, some or all of the plural types of the information described above may be combined for use.

If it is determined in step S103 that the possibility of getting off is absent (step S103/NO), the processing returns to step S102. On the other hand, if it is determined that the possibility of getting off is present (step S103/YES), the processing proceeds to step S104.

In step S104, the acquisition section 21 acquires, on the basis of the surrounding environment information of the lean vehicle 1, the approaching object information that is the information on the approaching object approaching the lean vehicle 1.

As described above, the surrounding environment sensor 12, which detects the surrounding environment information behind the lean vehicle 1, is mounted to the lean vehicle 1. In step S104, the acquisition section 21 acquires the approaching object information on the basis of the surrounding environment information, which is detected by such a surrounding environment sensor 12, for example. In this case, the acquired approaching object information includes information on the approaching object that is located behind the lean vehicle 1.

After step S104, in step S105, the execution section 22 executes the rider-assistance operation on the basis of the approaching object information, and the processing returns to step S102.

In step S104, the approaching object information that includes the information on the approaching object located behind the lean vehicle 1 is acquired. Accordingly, in step S105, the execution section 22 executes the rider-assistance operation on the basis of the approaching object information that includes the information on the approaching object located behind the lean vehicle 1.

More specifically, the execution section 22 executes, as the rider-assistance operation, the operation to issue the warning in order to notify the rider of the lean vehicle 1 of the presence or the approach of the approaching object that is located behind the lean vehicle 1. In the above operation, the execution section 22 issues the warning to the rider of the lean vehicle 1 according to the presence or a degree of the approach of the approaching object that is located behind the lean vehicle 1.

For example, the above warning is issued by using the display device 11. In this case, the above warning may be issued by turning on the display device 11 or may be issued by flashing the display device 11. In addition, a display color for the above warning may be the same as a display color for another warning or may be a different color therefrom. However, the above warning may be issued by using an audio output device in addition to the display device 11 or instead of the display device 11. Similar to the display device 11, the audio output device may be provided to the lean vehicle 1 or may be provided to the rider's gear (for example, the helmet).

Fig. 4 is a view illustrating a situation where the other vehicle 30 that is located behind the lean vehicle 1 is detected. In the example illustrated in Fig. 4, the lean vehicle 1 and the other vehicle 30 travel in the same travel lane. The other vehicle 30 is located behind the lean vehicle 1. Fig. 4 illustrates an example in which the other vehicle 30 is a four-wheeled automobile. However, the other vehicle 30 may be another type of the vehicle such as a straddle-type vehicle. The lean vehicle 1 is parked at a position that is in front of the other vehicle 30 and is close to an edge of the travel lane in a lane width direction.

As illustrated in Fig. 4, a detection range 40 of the surrounding environment sensor 12 radially expands to the rear from the rear portion of the lean vehicle 1. In the example illustrated in Fig. 4, the other vehicle 30 is located within the detection range 40 of the surrounding environment sensor 12. Accordingly, in step S104, the acquisition section 21 acquires, as the approaching object information, information indicating that the other vehicle 30 is present behind the lean vehicle 1 and the other vehicle 30 is approaching the lean vehicle 1. As a result, the execution section 22 notifies the rider of the lean vehicle 1 of the presence or the approach of the other vehicle 30 by turning on or flashing the display device 11 (or by outputting audio from the audio output device), for example.

As it has been described so far, the determination section 23 determines the presence or the absence of the possibility of getting off that is the possibility that the rider gets off the lean vehicle 1. Then, in the case where the determination section 23 determines that the possibility of getting off is present, the execution section 22 executes the rider-assistance operation. In this way, it is possible to execute the rider-assistance operation that is based on the approaching object information at appropriate timing, such as timing at which the rider performs a task for parking the lean vehicle 1 (for example, a task of supporting the lean vehicle 1 with his/her feet on a road surface and flipping the kickstand member 4 of the lean vehicle 1) or timing at which such a task is performed in the near future. Therefore, it is possible to improve safety of the lean vehicle 1.

Here, even after an ignition switch of the lean vehicle 1 is turned off, a power supply state to the controller 20 is maintained at least until a lapse of a certain amount of time. Accordingly, even after the rider stops the lean vehicle 1, turns off the ignition switch, and gets off the lean vehicle 1, the controller 20 can execute the rider-assistance operation that is based on the approaching object information.

The above description has been made on the example of the processing that is executed by the controller 20 with reference to Fig. 3 and Fig. 4. However, the controller 20 may execute processing other than the above-described processing.

For example, the above description has been made on the example in which the rider-assistance operation based on the approaching object information is executed when it is determined that the possibility of getting off is present. However, the acquisition section 21 may acquire the approaching object information regardless of whether the determination section 23 has determined the presence or the absence of the possibility of getting off. For example, the acquisition section 21 may acquire the approaching object information before the determination section 23 determines the presence or the absence of the possibility of getting off. For example, in addition to the above-described example, the rider-assistance operation based on the approaching object information may be executed while the lean vehicle 1 travels. That is, during the travel of the lean vehicle 1, the execution section 22 may execute the operation to issue the warning according to the presence or the degree of the approach of the approaching object located behind the lean vehicle 1 on the basis of the surrounding environment information that is acquired during the travel of the lean vehicle 1. In this way, it is also possible to improve the safety during the travel of the lean vehicle 1.

For example, the above description has been made on the example in which the operation to issue the warning to the rider of the lean vehicle 1 is executed as the rider-assistance operation. However, in addition to or instead of the warning to the rider, operation to issue a warning to a driver of the other vehicle 30 as the approaching object may be executed as the rider-assistance operation. That is, the rider-assistance operation may include the operation to issue the warning to the rider of the lean vehicle 1, or may include the operation to issue the warning to the driver of the other vehicle 30 as the approaching object.

For example, the above description has been made on the example in which, in the rider-assistance operation, the display device 11 is turned on or flashed (or the audio output device outputs the audio) when the approaching object is present or approaching. However, in the rider-assistance operation, the display device 11 may be turned on or flashed (or the audio output device may output the audio) when the approaching object is neither present or approaching, and may be stopped when the approaching object is present or approaching.

For example, the above description has been made on the example in which the rider-assistance operation is executed on the basis of the approaching object information that includes the information on the approaching object located behind the lean vehicle 1. However, the execution section 22 may execute the rider-assistance operation on the basis of the approaching object information that includes information on an approaching object located in front of the lean vehicle 1. For example, in the case where the surrounding environment sensor 12 that detects surrounding environment information in front of the lean vehicle 1 is mounted to the lean vehicle 1, the execution section 22 may use a detection result of such a surrounding environment sensor 12 and execute, as the rider-assistance operation, operation to issue a warning in order to notify the rider of the lean vehicle 1 of presence or approach of the approaching object (for example, the other vehicle) that is located in front of the lean vehicle 1. Here, also in the case where the rider-assistance operation is executed on the basis of the approaching object information that includes information on the approaching object located in front of the lean vehicle 1, various types of information, which are similar to those used in the processing described with reference to Fig. 3, can be used as the information that is used for the determination on the presence or the absence of the possibility of getting off.

### <Effects of Controller>

A description will be made on effects of the controller 20 according to the embodiment of the invention.

The controller 20 includes: the acquisition section 21 that acquires the approaching object information as the information on the approaching object approaching the lean vehicle 1 on the basis of the surrounding environment information of the lean vehicle **1;** and the execution section 22 that executes the rider-assistance operation to assist with driving by the rider on the basis of the approaching object information. The controller 20 further includes the determination section 23 that determines the presence or the absence of the possibility of getting off that is the possibility that the rider gets off the lean vehicle 1. Then, in the case where the determination section 23 determines that the possibility of getting off is present, the execution section 22 executes the rider-assistance operation. In this way, it is possible to execute the rider-assistance operation that is based on the approaching object information at the appropriate timing, such as the timing at which the rider performs the task for parking the lean vehicle 1 or the timing at which such a task is performed in the near future. Therefore, it is possible to improve the safety of the lean vehicle 1.

Preferably, in the controller 20, the determination section 23 determines the presence or the absence of the possibility of getting off on the basis of the vehicle state information that indicates the state of the lean vehicle 1. In this way, the presence or the absence of the possibility of getting off is appropriately determined.

Preferably, in the controller 20, the vehicle state information includes the lean angle information of the lean vehicle 1. In this way, the presence or the absence of the possibility of getting off is further appropriately determined.

Preferably, in the controller 20, the vehicle state information includes the kickstand member information of the lean vehicle 1. In this way, the presence or the absence of the possibility of getting off is further appropriately determined.

Preferably, in the controller 20, the determination section 23 determines the presence or the absence of the possibility of getting off on the basis of the rider state information that indicates the rider's state. In this way, the possibility of getting off is appropriately determined.

Preferably, in the controller 20, the rider state information includes the rider posture information. In this way, the possibility of getting off is further appropriately determined.

Preferably, in the controller 20, the rider state information includes the load information that is the information on the rider's load applied to the seating section 18 of the lean vehicle 1. In this way, the presence or the absence of the possibility of getting off is further appropriately determined.

Preferably, in the controller 20, the rider-assistance operation includes the operation to issue the warning according to the presence or the degree of the approach of the approaching object that is located behind the lean vehicle 1. In this way, it is possible to appropriately improve the safety of the lean vehicle 1 by issuing such a warning at the appropriate timing, such as the timing at which the rider performs the task for parking the lean vehicle 1 or the timing at which such a task is performed in the near future.

Preferably, in the controller 20, the surrounding environment sensor 12, which detects the surrounding environment information behind the lean vehicle 1, is mounted to the lean vehicle 1, and the acquisition section 21 acquires the approaching object information, which includes the information on the approaching object located behind the lean vehicle 1, on the basis of the surrounding environment information detected by the surrounding environment sensor 12. In this way, it is possible to execute the rider-assistance operation, which is based on the approaching object information including the information on the approaching object located behind the lean vehicle 1, at the appropriate timing, such as the timing at which the rider performs the task for parking the lean vehicle 1 or the timing at which such a task is performed in the near future. Here, the approaching object that is located behind the lean vehicle 1 is the approaching object that is particularly difficult for the rider to check. Accordingly, it is possible to further effectively improve the safety of the lean vehicle 1 by executing the rider-assistance operation at the appropriate timing on the basis of the approaching object information that includes the information on the approaching object located behind the lean vehicle 1.

Preferably, in the controller 20, during the travel of the lean vehicle 1, the execution section 22 executes the operation to issue the warning according to the presence or the degree of the approach of the approaching object located behind the lean vehicle 1 on the basis of the surrounding environment information that is acquired during the travel of the lean vehicle 1. In this way, it is also possible to improve the safety during the travel of the lean vehicle 1.

Preferably, in the controller 20, the rider-assistance operation includes the operation to issue the warning to the rider of the lean vehicle 1. In this way, for example, the rider of the lean vehicle 1 can be notified of the presence or the approach of the approaching object that is located behind the lean vehicle 1. Therefore, it is possible to further appropriately improve the safety of the lean vehicle 1.

Preferably, in the controller 20, the rider-assistance operation includes the operation to issue the warning to the driver of the other vehicle 30 as the approaching object. In this way, for example, it is possible to notify the driver of the other vehicle 30 of the presence or the approach of the lean vehicle 1 located in front of the other vehicle 30. Therefore, it is possible to further appropriately improve the safety of the lean vehicle 1.

The invention is not limited to the embodiment that has been described. For example, only a part of the embodiment may be implemented.

### Reference Signs List

1: Lean vehicle
2: Front wheel
3: Rear wheel
4: Kickstand member
10: Rider-assistance system
11: Display device
12: Surrounding environment sensor
13: Camera
14: Inertial measurement unit
15: Seating sensor
16: Front-wheel rotational frequency sensor
17: Rear-wheel rotational frequency sensor
18: Seating section
20: Controller
21: Acquisition section
22: Execution section
23: Determination section
30: Other vehicle
40: Detection range

## Claims

1. A controller (20) of a rider-assistance system (10) that assists with driving by a rider of a lean vehicle (1), the controller comprising:
an acquisition section (21) that acquires approaching object information as information on an approaching object approaching the lean vehicle (1) on the basis of surrounding environment information of the lean vehicle (1); and
an execution section (22) that executes rider-assistance operation to assist with driving by the rider on the basis of the approaching object information, and further comprising:
a determination section (23) that determines presence or absence of a possibility of getting off that is a possibility that the rider gets off the lean vehicle (1), wherein
in the case where the determination section (23) determines that the possibility of getting off is present, the execution section (22) executes the rider-assistance operation.

2. The controller according to claim 1, wherein
the determination section (23) determines the presence or the absence of the possibility of getting off on the basis of vehicle state information that indicates a state of the lean vehicle (1).

3. The controller according to claim 2, wherein
the vehicle state information includes lean angle information of the lean vehicle (1).

4. The controller according to claim 2, wherein
the vehicle state information includes kickstand member information of the lean vehicle (1).

5. The controller according to claim 1, wherein
the determination section (23) determines the presence or the absence of the possibility of getting off on the basis of rider state information that indicates the rider's state.

6. The controller according to claim 5, wherein
the rider state information includes rider posture information.

7. The controller according to claim 5, wherein
the rider state information includes load information that is information on the rider's load applied to a seating section (18) of the lean vehicle (1).

8. The controller according to claim 1, wherein
the rider-assistance operation includes operation to issue a warning according to presence or a degree of approach of the approaching object that is located behind the lean vehicle (1).

9. The controller according to claim 1, wherein
a surrounding environment sensor (12) that detects the surrounding environment information behind the lean vehicle (1) is mounted to the lean vehicle (1), and
the acquisition section (21) acquires the approaching object information, which includes information on the approaching object located behind the lean vehicle (1), on the basis of the surrounding environment information detected by the surrounding environment sensor (12).

10. The controller according to claim 9, wherein
during travel of the lean vehicle (1), the execution section (22) executes operation to issue a warning according to presence or a degree of approach of the approaching object located behind the lean vehicle (1) on the basis of the surrounding environment information that is acquired during the travel of the lean vehicle (1).

11. The controller according to any one of claims 1 to 10, wherein
the rider-assistance operation includes operation to issue a warning to the rider.

12. The controller according to any one of claims 1 to 10, wherein
the rider-assistance operation includes operation to issue a warning to a driver of another vehicle (30) as the approaching object.

13. A control method for a rider-assistance system (10) that assists with driving by a rider of a lean vehicle (1), the control method comprising:
acquiring approaching object information by an acquisition section (21) of a controller (20) on the basis of surrounding environment information of the lean vehicle (1), the approaching object information being information on an approaching object approaching the lean vehicle (1); and
executing rider-assistance operation by an execution section (22) of the controller (20) to assist with driving by the rider on the basis of the approaching object information, and further comprising:
determining presence or absence of a possibility of getting off by a determination section (23) of the controller (20), the possibility of getting off being a possibility that the rider gets off the lean vehicle (1), wherein
in the case where the determination section (23) determines that the possibility of getting off is present, the execution section (22) executes the rider-assistance operation.
